# EUROPÄISCHE PATENTANMELDUNG

(11) **EP 4 299 305 A1**
(43) Veröffentlichungstag der Anmeldung: **03.01.2024**
(21) Anmeldenummer: 22181469.2
(22) Anmeldetag: 28.06.2022
(51) Int. Cl.: B32B 5/02, B32B 29/00, B32B 29/02

(54) **HOCHDRUCK-SCHICHTPRESSSTOFFPLATTE**

(71) Anmelder: Argolite AG, Willisau, 6130 Willisau (CH)
(72) Erfinder: NUSSBAUMER, René, 6233 Büron (CH)
(74) Vertreter: Clerc, Natalia

(57) **Zusammenfassung**

Eine Hochdruck-Schichtpressstoffplatte weist einen Stapel aus mehreren Lagen von imprägniertem Kraftpapier (1) sowie eine erste und eine zweite Gewebeschicht (31, 32) innerhalb des Stapels aus Kraftpapier (1) auf. Die erste Gewebeschicht (31) ist in einem ersten Randbereich des Stapels angeordnet und die zweite Gewebeschicht (32) in einem zweiten Randbereich des Stapels angeordnet, wobei der zweite Randbereich dem ersten Randbereich gegenüberliegt. Diese Hochdruck-Schichtpressstoffplatte lässt sich einfach und kostengünstig herstellen und weist eine hohe Splitterfestigkeit auf.

## Beschreibung

### TECHNISCHES GEBIET

Die vorliegende Erfindung betrifft eine Hochdruck-Schichtpressstoffplatte, insbesondere eine dekorative Hochdruck-Schichtpressstoffplatte.

### STAND DER TECHNIK

Hochdruck-Schichtpressstoffplatten bestehen aus mehreren Schichten Papier oder Zellulosefaserstoff, die mit Harzen miteinander unter Druck und Wärme verpresst werden. Dekorative Schichtpressstoffplatten, auch HPL Platten genannt (HPL - High Pressure Laminate), weisen eine Dekorschicht auf. Sie sind üblicherweise gemäss DIN EN 438 gefertigt. Die HPL Platten werden üblicherweise bei einer Temperatur von ≥ 120° C und bei einem Druck von ≥ 5 MPa gepresst.

HPL Platten weisen eine harte Oberfläche und eine hohe Biegefestigkeit auf. Bei starker Schlag- oder Stossbeanspruchung besteht jedoch die Gefahr, dass derartige HPL Platten zersplittern. Dies ist insbesondere bei Verwendung derartiger Platten in Fahrzeugen, wie beispielsweise in Zügen, Bussen oder Wohnwagen nachteilig, da die scharfkantigen Bruchstücke zu Personen-Verletzungen führen können.

DE 29 48 257 C2 beschreibt eine Schichtpressstoffplatte, die zwischen einer Overlaypapierschicht und einer Dekorpapierschicht eine Schicht aus verfestigtem Wirrfaservliesstoff aus PET-Faser (PET = Polyethylenterephthalat) aufweist. Diese drei Decklagen sollen der aus Kraftpapierschichten aufgebauten Pressstoffplatte eine verbesserte Schlagzugfähigkeit geben.

EP 0 653 299 A1 offenbart eine Schichtpressstoffplatte mit einem Kern aus einem Stapel von mit Phenol-Formaldehydharz imprägnierten Kernpapieren und einem MelaminFormaldehydharz getränkten Deckpapier. Die Mittellage weist eine Zwischenschicht aus einem hochreissfesten Gewebe auf, das beidseitig mit den benachbarten Kernpapieren durch eine chemische Reaktion verbunden ist. Diese Zwischenschicht ist beidseitig mit thermoplastischen Polyäther-Polyurethan oder Polyester-Polyurethan beschichtet. Das hochreissfeste Gewebe ist ein Polyestergewebe oder ein Glasfasergewebe.

Splitterarme Schichtpressstoffplattensind teuer in der Herstellung oder aufwändiger zu bearbeiten.

### DARSTELLUNG DER ERFINDUNG

Es ist deshalb eine Aufgabe der Erfindung, eine kostengünstige, relativ dünn ausbildbare splitterarme Hochdruck-Schichtpressstoffplatte zu schaffen.

Diese Aufgabe löst eine Hochdruck-Schichtpressstoffplatte mit den Merkmalen des Patentanspruchs 1.

Die erfindungsgemässe Hochdruck-Schichtpressstoffplatte weist einen Stapel aus mehreren Lagen von imprägniertem Kraftpapier mit oder ohne flammhemmende Zusätze sowie eine erste und eine zweite Gewebeschicht innerhalb dieses Stapels aus Kraftpapier auf. Die erste Gewebeschicht ist in einem ersten Randbereich des Stapels angeordnet und die zweite Gewebeschicht ist in einem zweiten Randbereich innerhalb des Stapels angeordnet, wobei der zweite Randbereich dem ersten Randbereich gegenüberliegt.

Diese Hochdruck-Schichtpressstoffplatte ist relativ einfach aufgebaut und lässt sich kostengünstig herstellen. Die im Randbereich angebrachten Gewebeschichten behindern ein Splittern der Platte bei hoher Schlag- oder Stossbeanspruchung. Somit ist die Platte äusserst splitterarm und lässt sich deshalb optimal in Fahrzeugen verwenden.

Die erfindungsgemässe Hochdruck-Schichtpressstoffplatte lässt sich mit den üblichen Harzen und Kraftpapieren unter Verwendung der üblichen Drücke und Temperaturen herstellen. Vorzugsweise werden die üblichen Phenolharze oder Melaminharze verwendet. Die dekorativen Schichtpressstoffplatten lassen sich vorzugsweise gemäss DIN EN 438 herstellen.

Die Gewebeschichten sind vorzugsweise ohne weitere Haftvermittler oder Netzmittel, z.B. auf Basis von Acrylsäuren, Polyestern, Polyolefinen, Epoxiden oder Silanen mit den Kraftpapieren verbunden.

Vorzugsweise ist eine dritte Gewebeschicht vorhanden, die annähernd mittig im Stapel aus Kraftpapier angeordnet ist. Diese dritte Gewebeschicht erhöht die Splitterfestigkeit und ist insbesondere bei Platten ab 2 mm Dicke vorteilhaft.

Noch dickere Platten weisen vorzugsweise mehr als drei Gewebeschichten auf, wobei die weiteren Gewebeschichten zwischen der ersten und dritten bzw. zwischen der zweiten und dritten Gewebeschicht angeordnet sind. Vorzugsweise sind sie durch Kraftpapierlagen voneinander getrennt.

Das Kraftpapier, auch Kernpapier genannt, ist ein imprägniertes Papier, das mehrheitlich aus Zellstofffasern hergestellt wird. Es weist üblicherweise ein Flächengewicht von 60bis 300 g/m² auf.

Das Kraftpapier der erfindungsgemässen Hochdruck-Schichtpressstoffplatte kann schwer entflammbar oder normal entflammbar sein.

Die Gewebeschicht ist ein textiles Flächengebilde, vorzugsweise gewoben. Die Gewebeschicht besteht vorzugsweise aus einem reissfesten Material. Vorzugsweise ist sie schwer entflammbar.

Es lassen sich unterschiedliche Gewebearten in der erfindungsgemässen Hochdruck-Schichtpressstoffplatte verwenden. In bevorzugten Ausführungsformen sind die Gewebeschichten ein Polyestergewebe mit Leinwandbindung. Dieses weist den Vorteil auf, dass es relativ dünn mit einem geringen Flächengewicht sowie reissfest und kostengünstig ist. Alternativ lassen sich beispielsweise andere Bindungen oder Fasergelege oder andere reissfeste Polymer- oder Naturfasern wie z.B. Seide verwenden.

Vorzugsweise weisen die Gewebeschichten ein Flächengewicht von 60 g/m² bis 100 g/m² und bevorzugter von annähernd 80 g/m² auf.

Vorzugsweise sind die erste und zweite Gewebeschicht und, falls vorhanden die dritte bzw. weitere Gewebeschichten, identisch. D.h. sie bestehen aus demselben textilen Flächengebilde und sie weisen dasselbe Flächengewicht auf. Dies erleichtert die Herstellung und minimiert die Kosten.

Vorzugsweise sind die erste und zweite Gewebeschicht und, falls vorhanden die dritte bzw. weitere Gewebeschichten einlagig. Dies erleichtert die Verbindung mit dem Kraftpapier und erhöht den Verbund.

Die erfindungsgemässe Hochdruck-Schichtpressstoffplatte lässt sich als dekorative Kompakt Schichtpressstoffplatte ausbilden, wenn sie ihre zwei einander gegenüberliegenden Oberflächen durch je eine Dekorschicht gebildet ist und mindestens 2 mm dick ist. In diesen Ausführungsformen ist vorzugsweise zwischen Dekorschicht und erster bzw. zweiter Gewebeschicht mindestens eine Lage Kraftpapier angeordnet. Dies erleichtert die Herstellung, da die Gewebeschicht nicht direkt mit der Dekorschicht verbunden werden muss. Die Dekorschicht ist vorzugsweise ein Dekorpapier, allenfalls mit Overlay, üblicher Art.

Vorzugsweise ist genau eine Lage Kraftpapier zwischen Dekorschicht und erster bzw. zweiter Gewebeschicht angeordnet. Dies erhöht die Splitterfestigkeit, da das Gewebe in nächster Nähe zur Dekorschicht angeordnet ist.

Vorzugsweise ist zwischen der ersten und der dritten Gewebeschicht bzw. allenfalls weiteren Gewebeschichten und zwischen der zweiten und der dritten Gewebeschicht bzw. allenfalls weiteren Gewebeschichten ein Vielfaches mehr an Lagen Kraftpapier angeordnet als zwischen der ersten Gewebeschicht bzw. der zweiten Gewebeschicht und einer Aussenseite der Hochdruck-Schichtpressstoffplatte.

Für eine Platte von circa 3 mm Dicke wird ein Stapel von 14 Lagen imprägnierten Kraftpapieren mit circa 320 g/m² Flächengewicht und drei Lagen Gewebeschichten von ca. 80 g/m² sowie je eine aussenseitige Lage imprägniertem Dekorpapier mit circa 220 g/m². Flächengewicht verwendet. Zwischen zwei Gewebeschichten befinden sich 6 Lagen Kraftpapiere. Je eine Lage Kraftpapier befindet sich zwischen der äusseren Gewebeschicht und dem äusseren Dekorpapier.

Dünnere Platten weisen weniger Kraftpapiere und evtl. keine mittlere Gewebeschicht auf. Dickere Platten weisen mehr Kraftpapiere und evtl. mehr Gewebeschichten auf, die vorzugsweise einlagig sind.

Der Stapel Kraftpapiere mit den dazwischen liegenden Gewebeschichten sowie der Dekorschicht lässt sich in einem Herstellungsverfahren zu einer Platte verbinden. Die Herstellung von Zwischenprodukten ist nicht notwendig.

Weitere Ausführungsformen sind in den abhängigen Ansprüchen angegeben.

### KURZE BESCHREIBUNG DER ZEICHNUNGEN

Eine bevorzugte Ausführungsform der Erfindung wird im Folgenden anhand der Zeichnung beschrieben, die lediglich zur Erläuterung dient und nicht einschränkend auszulegen ist.

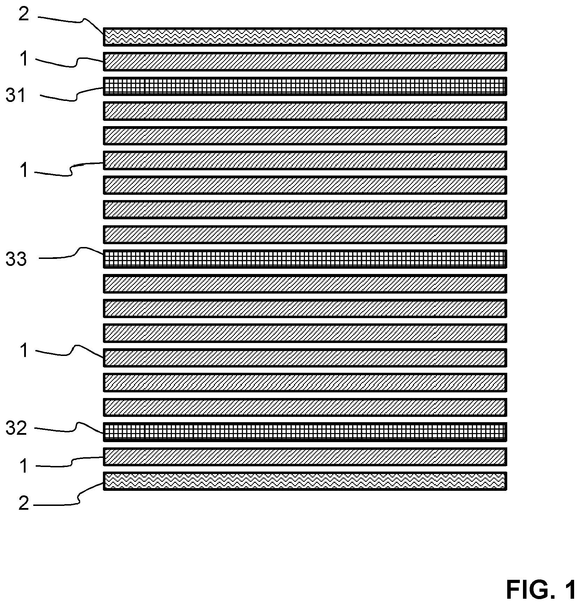

- Figur 1: zeigt eine schematische Darstellung eines Schichtaufbaus einer erfindungsgemässen Hochdruck-Schichtpressstoffplatte.

### BESCHREIBUNG BEVORZUGTER AUSFÜHRUNGSFORMEN

Die einzige Figur zeigt schematisch den Aufbau einer erfindungsgemässen dekorativen Hochdruck-Schichtpressstoffplatte, die im gefertigten Zustand eine Dicke von circa 3 mm aufweist.

Sie umfasst einen Stapel aus mehreren Lagen Kraftpapier 1. Das imprägnierte Kraftpapier ist vorzugsweise schwerentflammbar und weist vorzugsweise ein Flächengewicht von 150 - 300 g/m²auf.

Der Stapel ist an seiner Oberseite und seiner Unterseite mit je einer Dekorschicht 2 versehen. Vorzugsweise ist die Dekorschicht 2 ein imprägniertes, gefärbtes oder bedrucktes Dekorpapier aus gebleichter Zellulose mit einem Flächengewicht von 70 - 350 g/m².

Im Stapel sind drei Gewebeschichten 31, 32, 33 aus einem Polyesterstoff mit einem Flächengewicht von ca. 80 g/m² angeordnet. Eine erste Gewebeschicht 31 befindet sich im oberen Randbereich, wobei sie von einer einzigen Lage Kraftpapier 1 von der oberen Dekorschicht 2 getrennt ist. Eine zweite Gewebeschicht 32 befindet sich im unteren Randbereich, wobei sie ebenfalls von einer einzigen Lage Kraftpapier 1 von der unteren Dekorschicht 2 getrennt ist. Die dritte Gewebeschicht 33 befindet sich in der Mitte des Stapels, so dass jeweils sechs Lagen Kraftpapier 1 zwischen der dritten Gewebeschicht 33 und der ersten bzw. der zweiten Gewebeschicht 31, 32 liegen.

In einer Ausführungsform sind nur die Kraftpapiere 1 imprägniert, in anderen Ausführungsformen sind auch die Gewebeschichten 31, 32, 33 imprägniert. Ebenso ist es möglich, Haftschichten zwischen den einzelnen Lagen aufzubringen oder auf weitere Haftschichten zu verzichten.

Diese Lagen werden mit den üblichen Verfahren und mit Hilfe der üblichen Harze mittels Druck und Wärme miteinander verbunden. Typischerweise mit mindestens 120°C, vorzugsweise 140 bis 150°C, und mit mindestens 5 MPa Druck, vorzugsweise mit mindestens 8 MPa Druck.

**BEZUGSZEICHENLISTE**

| | | | |
|---|---|---|---|
| 1 | Kraftpapier | 32 | zweite Gewebeschicht |
| 2 | Dekorschicht | 33 | dritte Gewebeschicht |
| 31 | erste Gewebeschicht | | |

## Patentansprüche

1. Hochdruck-Schichtpressstoffplatte mit einem Stapel aus mehreren Lagen von imprägniertem Kraftpapier (1) und mit einer ersten und einer zweiten Gewebeschicht (31, 32) innerhalb des Stapels aus Kraftpapier (1), wobei die erste Gewebeschicht (31) in einem ersten Randbereich des Stapels angeordnet ist und wobei die zweite Gewebeschicht (32) in einem zweiten Randbereich des Stapels angeordnet ist, wobei der zweite Randbereich dem ersten Randbereich gegenüberliegt.

2. Hochdruck-Schichtpressstoffplatte nach Anspruch 1, wobei eine dritte Gewebeschicht (33) vorhanden ist und wobei die dritte Gewebeschicht (33) annähernd mittig im Stapel aus Kraftpapier (1) angeordnet ist.

3. Hochdruck-Schichtpressstoffplatte nach einem der Ansprüche 1 oder 2, wobei die Gewebeschichten (31, 32, 33) ein Polyestergewebe sind.

4. Hochdruck-Schichtpressstoffplatte nach einem der Ansprüche 1 bis 3, wobei die Gewebeschichten (31, 32, 33) ein Flächengewicht von 60 g/m² bis 100 g/m² und bevorzugter von annähernd 80 g/m² auf.

5. Hochdruck-Schichtpressstoffplatte nach einem der Ansprüche 1 bis 4, wobei die erste und zweite Gewebeschicht (31, 32) und, falls vorhanden die dritte Gewebeschicht (33) und falls vorhanden weitere Gewebeschichten, identisch sind.

6. Hochdruck-Schichtpressstoffplatte nach einem der Ansprüche 1 bis 5, wobei die erste und zweite Gewebeschicht (31, 32) und, falls vorhanden die dritte Gewebeschicht (33) und falls vorhanden weitere Gewebeschichten, einlagig sind.

7. Hochdruck-Schichtpressstoffplatte nach einem der Ansprüche 1 bis 6, wobei die Hochdruck-Schichtpressstoffplatte zwei einander gegenüberliegende Oberflächen aufweist, die durch je eine Dekorschicht (2) gebildet sind.

8. Hochdruck-Schichtpressstoffplatte nach Anspruch 7, wobei zwischen Dekorschicht (2) und erster bzw. zweiter Gewebeschicht (31, 32) mindestens eine Lage Kraftpapier (1) angeordnet ist.

9. Hochdruck-Schichtpressstoffplatte nach Anspruch 8, wobei genau eine Lage Kraftpapier (1) zwischen Dekorschicht (2) und erster bzw. zweiter Gewebeschicht (31, 32) angeordnet ist.

10. Hochdruck-Schichtpressstoffplatte nach einem der Ansprüche 1 bis 9, wobei zwischen der ersten und dritten Gewebeschicht (31, 33) und zwischen der zweiten und dritten Gewebeschicht (32, 33) ein Vielfaches mehr an Lagen Kraftpapier (1) angeordnet ist als zwischen der ersten Gewebeschicht (31) bzw. der zweiten Gewebeschicht (32) und einer Aussenseite der Hochdruck-Schichtpressstoffplatte.
